# FASCICULE DE BREVET EUROPEEN

(11) **EP 2 153 084 B1**
(45) Date de publication et mention de la délivrance du brevet: **08.08.2012**
(21) Numéro de dépôt: 08805599.1
(22) Date de dépôt: 22.05.2008
(51) Int. Cl.: F16F 15/129

(54) **EMBRAYAGE A FRICTION COMPRENANT UNE RONDELLE DE GUIDAGE ET UNE RONDELLE DE FROTTEMENT PERFECTIONNEES**
REIBUNGSKUPPLUNG MIT VERBESSERTEM REIBRING UND VERBESSERTEM FÜHRUNGSRING
FRICTION CLUTCH COMPRISING AN IMPROVED FRICTION RING AND AN IMPROVED GUIDE RING

(30) Priorité: 22.05.2007 FR 0755202
(43) Date de publication de la demande: 17.02.2010
(73) Titulaire: Valeo Embrayages, 80009 Amiens (FR)
(72) Inventeur: POIRIER, Gaël, F-80800 Sailly-le-Sec (FR); DAEL, Dominique, F-76870 Gaillefontaine (FR)
(74) Mandataire: Jeuland, Mickaël
(86) Numéro de dépôt international: PCT/FR2008/000708
(87) Numéro de publication internationale: WO 2009/004145

(56) Documents cités:
- FR-A- 2 826 083
- FR-A- 2 854 671
- FR-A- 2 890 713

## Description

L'objet de la présente invention est un embrayage à friction pour véhicule automobile comprenant une rondelle de guidage et une rondelle de frottement perfectionnées.

Un embrayage à friction de véhicule automobile a pour fonction de transmettre un couple entre un élément rotatif d'entrée et un élément rotatif de sortie, par pincement de la friction entre un plateau de pression et un volant moteur.

L'embrayage à friction doit assurer une transmission continue, c'est-à-dire sans-à-coups, en filtrant les vibrations, les chocs et les bruits provenant du moteur ou de la transmission lors de ré-embrayages ou d'inversions brutales de sens du couple.

II comprend un dispositif de friction qui constitue l'élément d'entrée, et un moyeu qui constitue l'élément de sortie et destiné à être couplé à un arbre d'entrée d'une boîte de vitesse.

Pour filtrer les vibrations et les chocs, il présente sur le dispositif de friction des amortisseurs.

En général, ces amortisseurs sont.composés principalement de :
- deux rondelles de guidage solidaires en rotation entre elles,
- un voile annulaire coaxial aux rondelles de guidage et mobile en rotation par rapport aux rondelles de guidage, et
- des moyens d'amortissement munis d'organes élastiques, reliant les rondelles de guidage et le voile, et de moyens de frottements.

Les organes élastiques sont les moyens d'accumulation de l'énergie, et les moyens de frottements sont les moyens de dissipation de l'énergie.

Ces moyens de frottement constituent un système d'hystérésis, c'est-à-dire qu'ils sont formés d'un ensemble de rondelles d'application dites de frottement, et de rondelles élastiques de compression axiales.

Les charges de ces moyens de frottements sont assurées par les rondelles élastiques, et l'interface entre les rondelles de frottement et les rondelles élastiques définit un coefficient de frottement.

Plusieurs étages de rondelles de frottements et de rondelles élastiques, peuvent se superposer comme le décrit la demande de brevet FR 2854671, cette disposition étant adaptée pour dissiper l'énergie contenue dans les organes élastiques des moyens d'amortissements.

Les rondelles de frottements peuvent être solidarisées aux voiles et aux rondelles de guidage par l'intermédiaire de pattes, ces pattes se logeant dans des évidements.

Les évidements permettent ainsi d'immobiliser en rotation les rondelles de frottements par rapport aux rondelles de guidage. Voir par exemple la demande de brevet FR 2890713 ou F R 2 826 083.

Les rondelles de guidage et les voiles sont généralement constitués de métal/tôle tandis que les rondelles de frottement sont constituées de plastique ou d'acier ou d'acier avec surmoulage plastique. Cette différence de matériau entraîne, du fait des vitesses de rotation importantes, l'incrustation ou l'enfoncement des pattes en plastique dans la tôle, au niveau des parois axiales des évidements dans lesquels les pattes sont logées.

Or, cette incrustation des pattes de la rondelle de frottement entraîne un jeu angulaire entre la surface de ces dernières et la surface plane de la rondelle de guidage, ce qui diminue l'efficacité de la filtration des vibrations par la rondelle de frottement. Ce problème technique est dénommé l' «effet tiroir ».

L'objet de la présente invention vise à résoudre ce problème de l'art antérieur en présentant un embrayage à friction, destiné à un véhicule automobile, du type comprenant un dispositif à friction avec : des moyens d'amortissement munis d'organes élastiques et de moyens de frottements, ces moyens de frottements ayant au moins une rondelle de guidage et une rondelle de frottement à pattes, ces pattes étant logées, dans des évidements, transversalement à la rondelle de guidage, par leurs extrémités ou corps, ces évidements permettant d'immobiliser en rotation la rondelle de frottement par rapport à la rondelle de guidage.

Cet embrayage à friction comporte des moyens qui permettent d'augmenter la surface de contact entre l'extrémité des pattes de la rondelle de frottement et les parois axiales des évidements de la rondelle de guidage, ce qui équivaut à diminuer la pression de contact entre l'extrémité des pattes et les parois axiales.

Dans un premier mode de réalisation, pour augmenter cette surface de contact, la rondelle de guidage comporte au moins un appui radial contre lequel est en appui le corps ou extrémité de la patte correspondante, cet appui étant en saillie par rapport à l'une des deux surfaces planes de la rondelle de guidage au niveau d'un évidement.

L'appui est disposé dans le prolongement de l'évidement, et présente une surface de contact avec la paroi latérale de la patte située dans le prolongement ou le même plan que celui des parois axiales de l'évidement.

Les évidements peuvent être débouchant.

Avantageusement, une paire d'appuis radiaux est disposée au niveau des deux parois axiales de l'évidement, et la rondelle de guidage présente au moins une paire d'appuis radiaux par évidement sur chacune de ses deux surfaces planes.

Les appuis radiaux présentent une surface de contact avec les parois latérales du corps des pattes de la rondelle de frottement, perpendiculaire au plan de la rondelle de guidage.

Dans un second mode de réalisation, pour augmenter cette surface de contact, le corps d'au moins une patte est replié au niveau de l'évidement.

La rondelle de guidage peut présenter tous les corps des pattes repliés au niveau des évidements dans lesquels ils sont logés.

Avantageusement, dans un troisième mode de réalisation, pour augmenter cette surface de contact, il est possible de combiner les deux modes de réalisation précédents et de réaliser une rondelle de frottement qui comporte le corps d'au moins une patte repliée dans un évidement au voisinage (de préférence au niveau) d'au moins un appui radial contre lequel est en appui l'extrémité ou corps de la patte correspondante, cet appui étant en saillie par rapport à l'une des deux surfaces planes de la rondelle de guidage.

La présente invention est maintenant décrite à l'aide d'exemples uniquement illustratifs, et nullement limitatifs de la portée de la présente invention, et à partir des dessins suivants dans lesquels :
- la figure 1 représente une vue de dessus d'un dispositif à friction d'un embrayage à friction;
- la figure 2 représente une vue de dessus de la rondelle de frottement située sur la rondelle de guidage;
- la figure 3 représente une vue de détail d'une patte de la rondelle de frottement logée dans un évidement de la rondelle de guidage ;
- la figure 4 représente une vue de détail des appuis radiaux de la rondelle de guidage;
- la figure 5 représente la surface plane de la rondelle de guidage vis-à-vis de laquelle les pattes de la rondelle de frottement font saillie;
- la figure 6 représente une vue de détail des appuis radiaux de la figure 5 ; et
- la figure 7 et 8 représentent une vue de détail de la patte repliée dans l'évidement dans la rondelle de guidage.

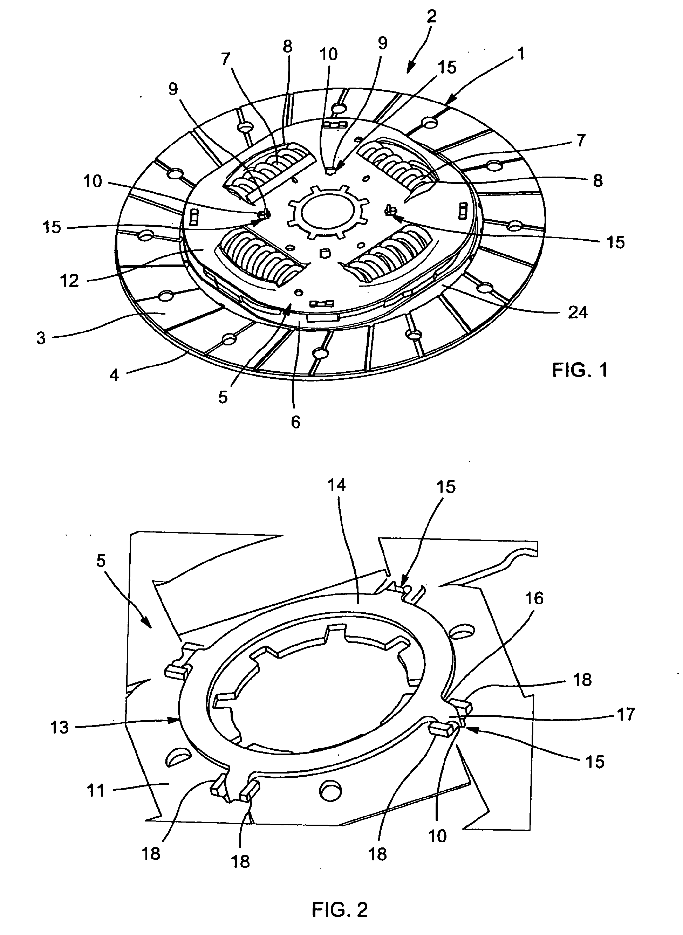

La figure 1 représente une vue de dessus légèrement en perspective d'un côté (ou piste de frottement) d'un dispositif de friction 1 d'un embrayage à friction 2.

Elle montre la superposition de deux garnitures 3 et 4 que supporte le disque de friction 24, ainsi que celle de deux rondelles de guidages 5 et 6.

Sur la rondelle de guidage 5, des organes élastiques 7 (ressorts) sont logés dans des évidements 8, et quatre extrémités 9 des pattes 15 d'une rondelle de frottement 13 font saillie hors d'évidements 10.

Cette rondelle de frottement 13 est représentée sur la figure 2.

Dans toute la description qui suit, on considère que le dispositif à friction 1 utilisé pour l'embrayage à friction 2 est celui de la figure 1, et on s'intéressera désormais à la rondelle de guidage 5.

La rondelle de guidage 5 comporte deux surfaces planes 11 et 12. Pour les figures 2 et suivantes, la surface plane 11 sur laquelle est posée la rondelle de frottement 13 est dite première surface 11, et la surface plane 12 symétrique de la première surface par rapport au plan de la rondelle de guidage 5, est dite deuxième surface 12.

La figure 2 représente une vue agrandie de la rondelle de frottement 13 posée sur la première surface 11 de la rondelle de guidage 5, suivant un premier mode de réalisation de l'invention.

Elle comporte une partie annulaire 14 et des pattes 15.

Les pattes 15, reliées à la partie annulaire 14, ont une première partie sensiblement radiale 16 située sur la première surface 11, et une seconde partie 17 située à l'extrémité de la partie radiale 16 et logée dans l'évidement 10, cette seconde partie 17 étant dénommée corps 17 de la patte 15 par souci de simplification dans toute la suite de la description, et pouvant présenter une dimension géométrique sensiblement axiale ou ayant un angle par rapport à la première surface 11.

La rondelle de frottement 13 présente quatre pattes 15 logées chacune, par leur corps 17, dans un évidement 10 de la rondelle de guidage 5, de façon sensiblement perpendiculaire au plan de la rondelle de guidage 5.

Les évidements 10 peuvent être débouchant, comme illustré sur la figure 2. Mais, il est possible, dans une variante, de les réaliser non débouchant.

Ces évidements 10 ont pour rôle d'immobiliser en rotation la rondelle de frottement 13 par rapport à la rondelle de guidage 5, c'est-à-dire de rendre solidaire en rotation mais axialement mobile la rondelle de frottement 13 par rapport à la rondelle de guidage 5.

Des appuis 18, disposés radialement et en saillie par rapport à la première surface 11 de la rondelle de guidage 5, au niveau des évidements 10, portent contre le corps 17 des pattes 15.

Ces appuis 18 peuvent présenter toute forme.

Sur cette figure 2, leur forme est sensiblement parallélépipédique et ils sont au nombre de huit.

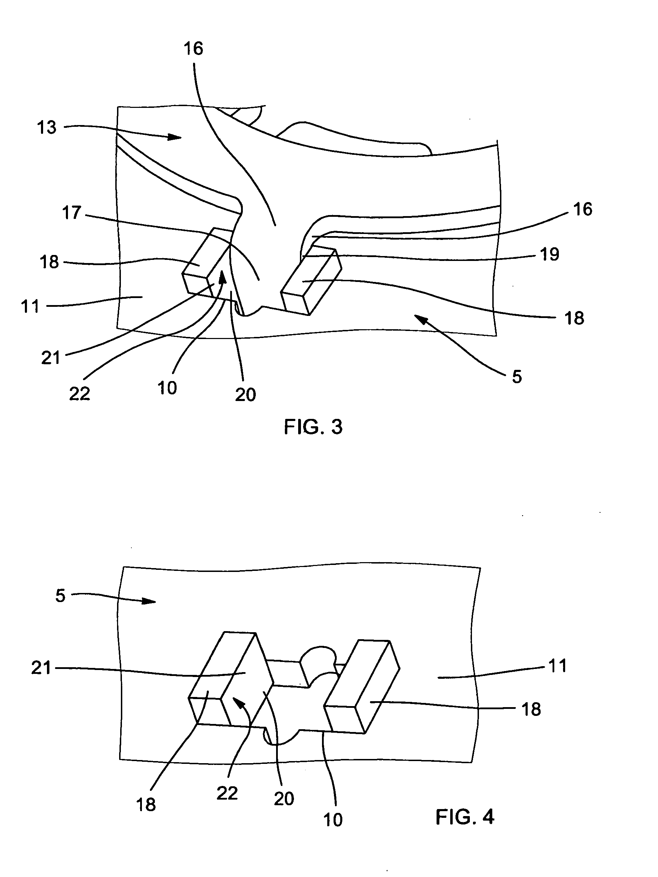

La figure 3 représente une vue de détail des appuis radiaux 18 et du corps 17 d'une patte 15 logée dans l'évidement 10 de la rondelle de guidage 5.

Le contact, au niveau des évidements 10, entre la rondelle de guidage 5 et la rondelle de frottement 13, est réalisé entre les appuis radiaux 18 et les parois latérales 19 du corps 17 des pattes 15, parois latérales 19 dont la dimension caractéristique pour la pression de contact est celle de leur épaisseur.

Ces appuis radiaux 18 augmentent la surface de contact au niveau des évidements 10 entre la rondelle de guidage 5 et la rondelle de frottement 13, ce qui permet de limiter l'incrustation du métal/tôle des parois axiales 20 des évidements 10 dans le plastique ou l'acier des parois latérales 19 du corps 17 (ou extrémité de la partie radiale 16) des pattes 15.

En effet, l'augmentation de cette surface de contact équivaut à diminuer la pression de contact entre les parois latérales 19 du corps 17 des pattes 15 et les parois axiales 20 des évidements 10.

En plus de diminuer la pression de contact au niveau du corps 17 des pattes 15, les appuis radiaux 18 contribuent aussi à l'immobilisation en rotation de la rondelle de frottement 13 dans la rondelle de guidage 5, cette dernière immobilisation en rotation étant déjà assurée par les évidements 10.

La figure 4 représente deux appuis radiaux 18 et un évidement 10 sur la rondelle de guidage 5, suivant le premier mode de réalisation de l'invention.

Elle montre que la surface de contact 21 possible apportée par les appuis radiaux 18 correspond au prolongement, dans le même plan, de la surface des parois axiales 20 de l'évidement 10 en contact avec les parois latérales 19 du corps 17 des pattes 15.

La surface totale 22 possible du contact entre les parois latérales 19 du corps 17 des pattes 15 et les parois axiales 20 des évidements 10 est donc droite ou plane.

L'évidement 10 débouchant peut avoir toute forme, en particulier une forme rectangulaire ou cylindrique.

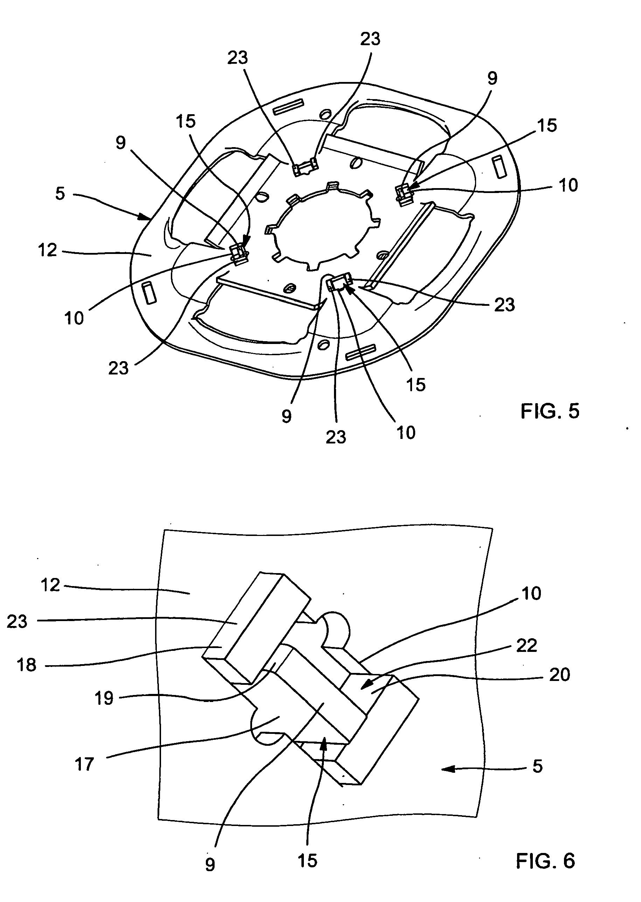

La figure 5 représente une vue de dessus en perspective de la deuxième surface 12 de la rondelle de guidage 5, selon une variante du premier mode de réalisation de l'invention.

Des appuis radiaux 23 en contact avec les parois latérales 19 du corps 17 des pattes 15 de la rondelle de frottement 13 y sont disposés, comme sur la première surface 11, augmentant ainsi, par rapport au premier mode de réalisation, la surface totale 22 possible de contact entre les parois latérales 19 du corps 17 des pattes 15 et les parois axiales 20 des évidements 10 de la rondelle de guidage 5.

La figure 6 représente une vue de détail, sur la deuxième surface plane 12, des appuis radiaux 23 assurant le contact entre les parois latérales 19 du corps 17 des pattes 15 de la rondelle de frottement 13 et les parois axiales 20 des évidements 10 de la rondelle de guidage 5.

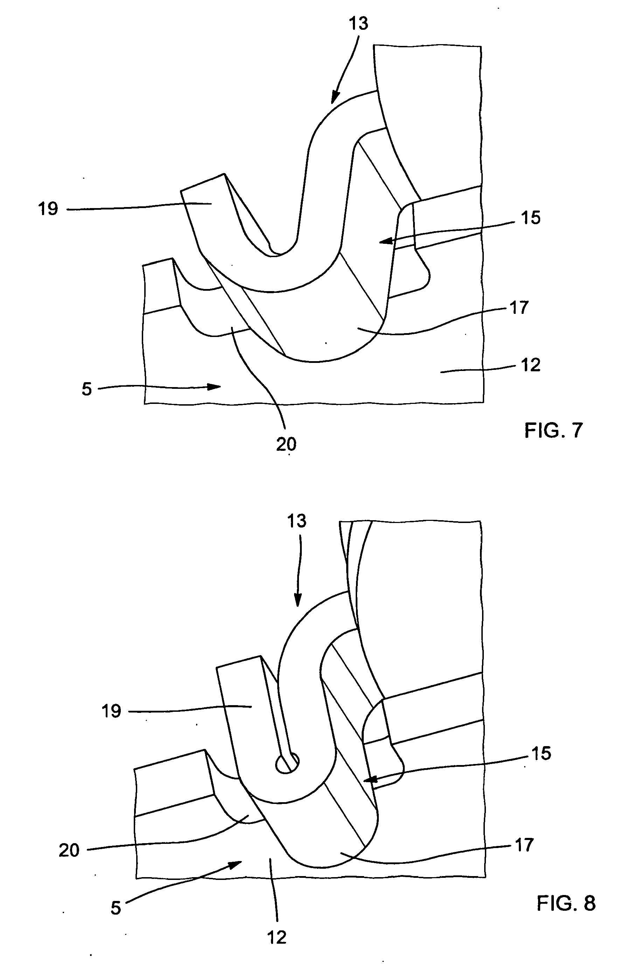

Les figures 7 et 8 représentent un deuxième mode de réalisation de l'invention.

Les corps 17 des pattes 15 y sont repliés dans l'évidement 10, et forment un U, ce qui permet à nouveau d'augmenter la surface de contact entre les parois latérales 19 du corps 17 des pattes 15 et les parois axiales 20 des évidements 10 de la rondelle de guidage 5.

Il est possible dans une variante de combiner avantageusement les deux modes de réalisation de l'invention, à savoir de disposer, sur la rondelle de guidage 5, des appuis radiaux 18 et 23, par exemple, sur ces deux surfaces planes 11 et 12, et de replier les corps 17 des pattes 15 au niveau des évidements 10.

Il serait aussi possible de réaliser des pattes 15 ayant uniquement une partie axiale ou corps 17, la partie radiale 16 étant supprimée, ce corps 17 serait alors associé à des appuis radiaux 23 sur la deuxième surface plane 12, ou au contraire, ces pattes 15 pourraient présenter uniquement une partie radiale 16.

Ces modes de réalisation donnés à titre illustratif ne limitent pas la portée des revendications.

## Revendications

1. Embrayage à friction, destiné à un véhicule automobile, du type comprenant un dispositif à friction (1) avec : des moyens d'amortissement munis d'organes élastiques (7) et de moyens de frottements, ces moyens de frottements ayant au moins une rondelle de guidage (5) et une rondelle de frottement (13) à pattes (15), ces pattes (15) étant logées, dans des évidements (10), transversalement à la rondelle de guidage (5), par leurs extrémités ou corps (17), ces évidements (10) permettant d'immobiliser en rotation la rondelle de frottement (13) par rapport à la rondelle de guidage (5), **caractérisé en ce que** la rondelle de guidage (5) comporte au moins un appui radial (18) contre lequel est en appui le corps (17) de la patte (15) correspondante, cet appui (18) étant en saillie par rapport à l'une des deux surfaces planes (11) de la rondelle de guidage (5) au niveau d'un évidement (10).

2. Embrayage à friction, destiné à un véhicule automobile, du type comprenant un dispositif à friction (1) avec : des moyens d'amortissement munis d'organes élastiques (7) et de moyens de frottements, ces moyens de frottements ayant au moins une rondelle de guidage (5) et une rondelle de frottement (13) à pattes (15), lesdites pattes (15) ayant une première partie sensiblement radiale (16) et un corps (17) située à l'extrémité de ladite partie sensiblement radiale (16) et présentant une dimension géométrique sensiblement axiale, ces pattes (15) étant logées, dans des évidements (10), transversalement à la rondelle de guidage (5), par leurs extrémités ou corps (17), ces évidements (10) permettant d'immobiliser en rotation la rondelle de frottement (13) par rapport à la rondelle de guidage (5), **caractérisé en ce que** le corps (17) d'au moins une patte (15) est replié dans l'évidement (10)et forme un U.

3. Embrayage à friction selon les revendications 1 et 2, **caractérisé en ce que** le corps (17) d'au moins une patte (15) est repliée dans au moins un évidement (10) au voisinage d'au moins un appui radial (18) contre lequel est en appui l'extrémité ou corps (17) de la patte (15) correspondante, cet appui (18) étant en saillie par rapport à l'une des deux surfaces planes (11) de la rondelle de guidage (5).

4. Embrayage à friction selon l'une des revendication 1 ou 3, **caractérisé en ce que** l'appui radial (18) est disposé dans le prolongement de l'évidement (10), et présente une surface (21) en contact avec la paroi latérale (19) du corps (17) de la patte (15) et située dans le même plan que celui de l'une des parois axiales (20) de l'évidement (10).

5. Embrayage à friction selon l'une des revendications 1 à 4, **caractérisé en ce que** les évidements (10) sont **débouchant.**

6. Embrayage à friction selon la revendication précédente, **caractérisé en ce qu'**au moins une paire d'appuis radiaux (18, 23) est disposée sur l'une des deux surfaces planes (11, 12) de la rondelle de guidage (5) au niveau des deux parois axiales (20) d'un évidement (10).

7. Embrayage à friction selon la revendication précédente, **caractérisé en ce que** la rondelle de guidage (5) présente une paire d'appuis radiaux (18, 23) par évidement (10) sur chacune de ses deux surfaces planes (11, 12).

8. Embrayage à friction selon l'une des revendications 2 à 7, **caractérisé en ce que** la rondelle de guidage (5) présente tous les corps (17) des pattes (15) repliés au niveau des évidements (10) dans lesquels ils sont logés.

## Claims

1. Friction clutch, designed for a motor vehicle, of the type comprising a friction device (1) with: damping means which are provided with resilient units (7) and friction means, these friction means having at least one guide washer (5) and a friction washer (13) with lugs (15), these lugs (15) being accommodated in recesses (10), transversely to the guide washer (5) by their ends or body (17), these recesses (10) making it possible to immobilise the friction washer (13) in rotation relative to the guide washer (5), **characterised in that** the guide washer (5) comprises at least one radial support (18) against which the body (17) of the corresponding lug (15) is supported, this support (18) projecting relative to one of the two flat surfaces (11) of the guide washer (5) at the level of a recess (10).

2. Friction clutch, designed for a motor vehicle, of the type comprising a friction device (1) with: damping means which are provided with resilient units (7) and friction means, these friction means having at least one guide washer (5) and one friction washer (13) with lugs (15), these lugs (15) having a substantially radial first part (16) and a body (17) situated at the end of the said substantially radial part (16) and having a substantially axial geometric dimension, these lugs (15) being accommodated in recesses (10) transversely to the guide washer (5) by their ends or body (17), these recesses (10) making it possible to immobilise the friction washer (13) in rotation relative to the guide washer (5), **characterised in that** the body (17) of at least one lug (15) is folded back into the recess (10) and forms a "U".

3. Friction clutch according to claims 1 and 2, **characterised in that** the body (17) of at least one lug (15) is folded back into at least one recess (10) in the vicinity of at least one radial support (18) against which the end or body (17) of the corresponding lug (15) is supported, this support (18) projecting relative to one of the two flat surfaces (11) of the guide washer (5).

4. Friction clutch according to one of claims 1 or 3, **characterised in that** the radial support (18) is disposed in the extension of the recess (10), and has a surface (21) which is in contact with the lateral wall (19) of the body (17) of the lug (15), and is situated on the same plane at that of one of the axial walls (20) of the recess (10).

5. Friction clutch according to one of claims 1 to 4, **characterised in that** the recesses (10) are through recesses.

6. Friction clutch according to the preceding claim, **characterised in that** at least one pair of radial supports (18, 23) is disposed on one of the two flat surfaces (11, 12) of the guide washer (5) at the level of the two axial walls (20) of a recess (10).

7. Friction clutch according to the preceding claim, **characterised in that** the guide washer (5) has a pair of radial supports (18, 23) per recess (10) on each of its two flat surfaces (11, 12).

8. Friction clutch according to one of claims 2 to 7, **characterised in that** the guide washer (5) has all the bodies (17) of the lugs (15) folded back at the level of the recesses (10) in which they are accommodated.

## Patentansprüche

1. Reibungskupplung, die für ein Kraftfahrzeug bestimmt ist, umfassend eine Reibungsvorrichtung (1) mit: Dämpfungsmitteln, die mit elastischen Organen (7) und Reibungsmitteln versehen sind, wobei diese Reibungsmittel mindestens eine Führungsscheibe (5) und eine Reibungsscheibe (13) mit Laschen (15) haben, wobei diese Laschen (15) mit ihren Enden oder Hauptstücken (17) quer zur Führungsscheibe (5) in Aussparungen (10) aufgenommen sind, wobei diese Aussparungen (10) es erlauben, die Reibungsscheibe (13) relativ zur Führungsscheibe (5) rotatorisch festzulegen, **dadurch gekennzeichnet, dass** die Führungsscheibe (5) zumindest eine radiale Auflage (18) aufweist, gegen die das Hauptstück (17) der entsprechenden Lasche (15) anliegt, wobei diese Auflage (18) auf Höhe einer Aussparung (10) relativ zu einer der beiden planen Oberflächen (11) der Führungsscheibe (5) überstehend ist.

2. Reibungskupplung, die für ein Kraftfahrzeug bestimmt ist, umfassend eine Reibungsvorrichtung (1) mit: Dämpfungsmitteln, die mit elastischen Organen (7) und Reibungsmitteln versehen sind, wobei diese Reibungsmittel mindestens eine Führungsscheibe (5) und eine Reibungsscheibe (13) mit Laschen (15) haben, wobei die Laschen (15) einen in etwa radialen ersten Teil (16) und ein Hauptstück (17), das sich am Ende des besagten in etwa radialen ersten Teils (16) befindet und eine in etwa axiale geometrische Dimension hat, wobei die Laschen (15) mit ihren Enden oder Hauptstücken (17) quer zur Führungsscheibe (5) in Aussparungen (10) aufgenommen sind, wobei diese Aussparungen (10) es erlauben, die Reibungsscheibe (13) relativ zur Führungsscheibe (5) rotatorisch festzulegen, **dadurch gekennzeichnet, dass** das Hauptstück (17) mindestens einer Lasche (15) in der Ausnehmung (10) umgeschlagen ist und ein U bildet.

3. Reibungskupplung nach den Ansprüchen 1 und 2, **dadurch gekennzeichnet, dass** das Hauptstück (17) mindestens einer Lasche (15) in mindestens einer Ausnehmung (10) in der Umgebung mindestens einer radiale Auflage (18), gegen die das Ende oder das Hauptstück (17) der entsprechenden Lasche (15) anliegt, umgeschlagen ist, wobei diese Auflage (18) relativ zu einer der beiden planen Oberflächen (11) der Führungsscheibe (5) überstehend ist.

4. Reibungskupplung nach einem der Ansprüche 1 oder 3, **dadurch gekennzeichnet, dass** die radiale Auflage (18) in der Verlängerung der Ausnehmung (10) angeordnet ist und eine Oberfläche (21) aufweist, die in Kontakt mit der Seitenwand (19) des Hauptstücks (17) der Lasche (15) ist und die sich in derselben Ebene befindet, wie eine der axialen Wände (20) der Ausnehmung (10).

5. Reibungskupplung nach einem der Ansprüche 1 bis 4, **dadurch gekennzeichnet, dass** die Ausnehmungen (10) durchgehend sind.

6. Reibungskupplung nach dem vorrangehenden Anspruch, **dadurch gekennzeichnet, dass** mindestens ein Paar von radialen Auflagen (18, 23) auf einer der beiden planen Oberflächen (11, 12) der Führungsscheibe (5) auf Höhe der beiden axialen Wände (20) einer Aussparung (10) angeordnet ist.

7. Reibungskupplung nach dem vorrangehenden Anspruch, **dadurch gekennzeichnet, dass** die Führungsscheibe (5) auf jeder ihrer beiden planen Oberflächen (11, 12) ein Paar von radialen Auflagen (18, 23) pro Ausnehmung (10) aufweist.

8. Reibungskupplung nach einem der Ansprüche 2 bis 7, **dadurch gekennzeichnet, dass** die Führungsscheibe (5) Hauptstücke (17) der Laschen (15) aufweist, die alle auf Höhe der Ausnehmungen (10), in welchen sie aufgenommen sind, umgeschlagen sind.
